# EUROPÄISCHE PATENTANMELDUNG

(11) **EP 4 345 707 A1**
(43) Veröffentlichungstag der Anmeldung: **03.04.2024**
(21) Anmeldenummer: 23401037.9
(22) Anmeldetag: 29.09.2023
(51) Int. Cl.: G06Q 10/063, G06Q 10/08, G06Q 50/04, G09F 3/20

(54) **ESL-ETIKETT ZUR DATENÜBERTRAGUNG**

(30) Priorität: 29.09.2022 DE 102022003620; 21.06.2023 DE 202023103430 U
(71) Anmelder: Orgatex GmbH, 40764 Langenfeld (DE)
(72) Erfinder: Mueller, Patrick, 34132 Kassel (DE)
(74) Vertreter: Seyer & Nobbe Patentanwälte PartmbB

(57) **Zusammenfassung**

Die Erfindung betrifft ein ESL-Etikett 10, 11, 14 zur Datenübertragung und Informationsanzeige von Daten, bestehend zumindest aus einer Anzeigeeinrichtung 9 und einem Funkmodel. Um einen Übertragungsweg aufzuzeigen, welcher mit geringstmöglichen Investitionskosten verbunden ist, ist vorgesehen, dass die ESL-Etiketten ein Funkmodul aufweisen, welches Daten bidirektional von und zu einem Speicher- und Serverdienst 1 (Cloud) über ein Mobilfunknetz übertragen kann. Durch diese Maßnahme kann jedes ESL-Etikett 10, 11, 14 unmittelbar Daten mit der Cloud austauschen, ohne dass große Investitionen getätigt werden müssen.

## Beschreibung

Die Erfindung betrifft ein ESL-Etikett zur Datenübertragung und Informationsanzeige von Daten, bestehend zumindest aus einer Anzeigeeinrichtung und einem Funkmodel.

ESL-Etiketten werden zur Informationsanzeige von Daten, beispielsweise Preisangaben in Geschäften verwendet. Hierbei kann es sich um elektronische Etiketten handeln, die von einem Server mit oder ohne Funkmodul Informationen erhalten und diese auf der vorhandenen Anzeigeeinrichtung wiedergegeben. Der Vorteil dieser Etiketten besteht darin, dass eine Aktualisierung jederzeit möglich ist, ohne einen Austausch von Etiketten vornehmen zu müssen, um händisch eventuelle Preisänderungen in Geschäftsräumen anzuzeigen. Mit Hilfe der ESL-Etiketten besteht die Möglichkeit, dass die Daten innerhalb kürzester Zeit aktualisiert werden können.

Derartige ESL-Etiketten sind aber nicht nur zur Anzeige von Preisinformationen verwendbar, sondern können in nahezu jedem Betrieb oder Büro verwendet werden, um beispielsweise wichtige Hinweise für einen Fertigungsprozess, für Angestellte oder ein Transportunternehmen zu übermitteln. Soweit beispielsweise Transportfahrzeuge mit einem ESL-Etikett ausgestattet werden, kann wesentlich leichter eine Kontrollfunktion ausgeführt werden, um die zu transportierenden Waren einem Bestimmungsort sicher zuzuführen. Sie können darüber hinaus zur Optimierung eines Fertigungsprozesses eingesetzt werden und sind von großer Bedeutung, um Stillstände der Fertigungsbänder zu vermeiden oder nur kurzzeitig entstehen zu lassen, wodurch die ansteigenden Kosten begrenzt werden können und darüber hinaus die Motivation der Mitarbeiter aufrechterhalten wird. Beispielsweise kann mit Hilfe der Etiketten eine notwendige Transparenz über Fertigungs- und Lieferprozesse herbeigeführt werden, um die Kommunikation von Produktionsplänen, Vorgaben und Zielgrößen, Leistungskennzahlen sowie eine Produktionsüberwachung zu ermöglichen. Durch eine offene Informationspolitik wird eine stärke Identifikation der Mitarbeiter mit dem Unternehmen herbeigeführt und Entscheidungen sind wesentlich einfacher nachvollziehbar und die Ziele damit klar erkennbar.

Aufgrund einer kurzen Reaktionszeit der ESL-Etiketten sind diese zur Datenübertra-gung und Informationsweiterleitung bestens geeignet. Aus den vorgenannten Gründen spielen daher ESL-Etiketten eine besondere Rolle in einem modernen Warenwirtschaftssystem und sind unentbehrlich geworden, wobei der Einsatz der ESL-Etiketten nicht nur auf die zuvor genannten Verwendungsmöglichkeiten begrenzt ist.

Als nachteilig ist aber anzusehen, dass entsprechende Datenleitungen von den Servern zu den ESL-Etiketten verlegt werden müssen, oder ein Funknetz wie beispielsweise W-LAN oder Bluetooth aufgebaut werden muss. Hierbei muss sichergestellt werden, dass eine flächendeckende Versorgung eines W-LAN oder Bluetooth Netzes mit relativ großen Reichweiten besteht. Der hierdurch erforderliche Arbeitsaufwand und die notwendigen Investitionskosten können zu einem enormen Aufwand führen, sodass auch heute noch viele Firmen auf den Einsatz von ESL-Etiketten verzichten.

Um die Akzeptanz der ESL-Etiketten zu steigern, liegt der vorliegenden Erfindung die Aufgabenstellung zugrunde, einen Übertragungsweg aufzuzeigen, welcher mit geringstmöglichen Investitionskosten durchführbar ist.

Erfindungsgemäß ist zur Lösung der Aufgabenstellung vorgesehen, dass die ESL-Etiketten ein Funkmodul aufweisen, welches Daten bidirektional von und zu einem Speicher- und Serverdienst (Cloud) über ein Mobilfunknetz übertragen kann. Weitere vorteilhafte Ausgestaltungen der Erfindung sind den Unteransprüchen zu entnehmen.

Die Mobilfunknetze sind mit einer hohen Übertragungskapazität und einer flächende-ckenden Reichweite besonders geeignet, um die Daten von den ESL-Etiketten bidirektional von und zu einer Cloud zu übertragen. Mit Hilfe der Cloud besteht die Möglichkeit eine Vielzahl von ESL-Etiketten wahlweise gleichzeitig oder einzeln zu aktualisieren, um auf diese Weise die aktuellsten Informationen für die Mitarbeiter ggf. auch Kunden zur Verfügung zu stellen. Die schnelle Datenverbindung und Datenverarbeitung über das Mobilfunknetz führt zur Optimierung eines Fertigungsprozesses, einer Transportlogistik oder eine Informationsübermittlung für die Mitarbeiter. Durch die Verwendung eines Speicher- und Serverdienstes in Form einer Cloud, kann eine zentrale onlinebasierte Erfassung sämtlicher Daten und Übertragung der Daten an die ESL-Etiketten erfolgen.

Speziell über die Mobilfunkanbindung können die Daten sehr schnell von dem Speicher- und Serverdienst erfasst und mit geringster Verzögerungszeit an die ESL-Etiketten weitergeleitet werden. Der besondere Vorteil der Verwendung von ESL-Etiketten mit einer Mobilfunkanbindung und einem Speicher- und Serverdienst in Form einer Cloud besteht darin, dass ein nur geringer Aufwand notwendig ist, um sämtliche Komponenten eines Überwachungs- und Steuerungssystems einschließlich der ESL-Etiketten miteinander zu verbinden, um die gewünschte Kommunikation zu ermöglichen, wobei jede Komponente jeweils für sich allein agieren kann.

Ein wesentlicher Vorteil der ESL-Etiketten besteht weiterhin dadurch, dass diese Lösung eine hohe Flexibilität und einen sukzessiven Einstieg mit geringen Investitionskosten ermöglicht, da die Schaffung notwendiger Infrastrukturen und der Aufbau eines lokalen Netzes nicht erforderlich ist. Es besteht vielmehr die Möglichkeit eine sofortige Anpassung auf die individuellen und sich verändernden Bedürfnisse der Produktionsherstellung und Transportlogistik vorzunehmen. Von besonderem Vorteil ist, dass auf eine Infrastruktur in Form beispielswiese eines Routers verzichtet werden kann, weil hierzu die Mobilfunknetze eingesetzt werden und somit keine Kommunikationsprobleme auf großen Firmengeländen, Fertigungsstraßen oder auf dem Transportweg von Gütern aufgrund einer mangelhaften Überdeckung auftreten können.

Die Installation und Inbetriebnahme vereinfacht sich hierbei wesentlich, weil lediglich eine Anbindung an das Mobilfunknetz erforderlich ist und dieses mit einer großen Reichweite und Überdeckung zur Verfügung steht. Über den Speicher- und Serverdienst in der Cloud können alle Daten erfasst werden, um die notwendigen Informationen unmittelbar weiterzuleiten. Durch die Echtzeit-Erfassung von Betriebszuständen, insbesondere von Störungen und die Echtzeit-Übertragung der Daten zum Speicher- und Serverdienst (Cloud) ist eine äußerst schnelle Informationsübermittlung möglich, wodurch eine schnelle Reaktion zur Steuerung eines Fertigungsprozesses gewährleistet ist, wobei die ESL-Etiketten verwendet werden können. Aufgrund einer Breitbandanbindung an das Mobilfunknetz können die ESL-Etiketten tragbar ausgebildet sein, um beispielsweise eine Kommissionsliste abzuarbeiten.

In Ausgestaltung der Erfindung ist vorgesehen, dass die ESL-Etiketten zur Montage an Maschinen, Maschineneinrichtungen, Transportbehältern und Lagereinrichtungen vorgesehen sind. Die Verwendbarkeit der ESL-Etiketten ist sehr vielseitig und ermöglicht beispielsweise eine Montage an den vorgenannten Einrichtungen, um entweder den Maschinenbedienern oder Lagermitarbeitern ausreichend Informationen zur Verfügung zu stellen. Mithilfe der ESL-Etiketten kann eine Intralogistik aufgebaut werden, welche über kurze Reaktionszeiten verfügt und einen Informationsaustausch jederzeit und an beliebigen Orten ermöglicht. Selbst ein Shopfloor-Management ist auf diese Weise mithilfe der ESL-Etiketten möglich.

In weiterer Ausgestaltung der Erfindung ist vorgesehen, dass die ESL-Etiketten über ein Bussystem oder IO/-Kontakte mit Maschinen oder externen Anzeigeeinrichtungen verbunden sind. Durch diese Möglichkeit können Informationen der Maschinen oder externen Anzeigeeinrichtungen entweder an die Cloud weitergeleitet werden oder zu den externen Anzeigevorrichtungen. Soweit eine WIFI-Struktur oder ähnliche Netzwerke bereits vorhanden sein sollten, können diese mit eingebunden werden.

In Ausgestaltung der Erfindung ist ferner vorgesehen, dass die ESL-Etiketten Warnsignale in Form von optischen und/oder akustischen Signalen oder Meldungen erzeugen. Mithilfe der optischen oder akustischen Warnsignale besteht die Möglichkeit eine besondere Aufmerksamkeit der anwesenden Personen zu erzielen, um auf diese Weise beispielsweise Gefahren abzuwenden.

In Ausgestaltung der Erfindung ist weiterhin vorgesehen, dass die ESL-Etiketten mit einem nicht flüchtigen Display, beispielsweise E-Ink ausgestattet sind. Mithilfe der nicht flüchtigen Displays, beispielsweise E-Ink besteht die Möglichkeit, den Energieverbrauch deutlich zu reduzieren und damit die Nutzungsdauer der ESL-Etiketten zu steigern, sofern keine externe Energiequelle zur Verfügung steht.

Alternativ besteht die Möglichkeit, dass die ESL-Etiketten mit einer stationären Energieversorgung in Form einer langlebigen Batterie ausgestattet sind oder elektromagnetische Energie aus einem Funkfeld entnehmen, um auf diese Weise eine lange Benutzungsdauer zu ermöglichen.

In weiterer Ausgestaltung der Erfindung ist vorgesehen, dass die ESL-Etiketten mit klein- oder großformatigen Anzeigeeinrichtungen ausgestattet oder mit Beamern verbunden sind. Mithilfe der klein- oder großformatigen Anzeigeeinrichtungen können die Informationen in der gewünschten Größe bereitgestellt werden und können je nach Einsatzzweck die Informationen in einer notwendigen Größe darstellen, beispielsweise in Form von Schautafeln.

In Ausgestaltung der Erfindung ist ferner vorgesehen, dass die Anzeigeeinrichtungen durch einen Farbumschlag eine Störung anzeigen. Mithilfe eine Farbumschlages beispielsweise in die Farbe Rot, kann eine Störung mit entsprechender nachhaltiger Wahrnehmungsmöglichkeit angezeigt werden, um Personal auf eine bestehende Gefahr hinzuweisen.

In Ausgestaltung der Erfindung ist ferner vorgesehen, dass die Anzeigeeinrichtung zur Darstellung von Grafikdaten, Codes und/oder alphanummerischen Informationen geeignet ist. Auf diese Weise lassen sich alle notwendigen Informationen in der erforderlichen Form darstellen und vervollständigen die Signalübermittlung.

In weiterer Ausgestaltung der Erfindung ist vorgesehen, dass die Anzeigeeinrichtung Live-Durchsagen oder Text-Speech-Anzeigen überträgt oder darstellt. Durch die Möglichkeit von Live-Durchsagen oder Text-Speech-Anzeigen kann ebenfalls die Aufmerksamkeit der beteiligten Personen gesteigert werden, um die notwendigen Informationen zu übermitteln.

In besonderer Ausgestaltung der Erfindung ist vorgesehen, dass die Anzeigeeinrichtung zur Übertragung von Nachrichten in Form von E-Mails, SMS, Smartwatch- oder Telefoninformationen vorgesehen ist. Durch die weitere Ausgestaltung zur Übertragung von Nachrichten wird die Vielseitigkeit der ESL-Etiketten erhöht und zudem die Informationsübermittlung mithilfe eines einzelnen Gerätes durchführbar.

In besonderer Ausgestaltung der Erfindung ist ferner vorgesehen, dass die Anzeigeeinrichtung modular aufgebaut und erweiterbar ist. Die Anzeigeeinrichtungen können modular aufgebaut sein und sind somit jederzeit erweiterbar, sodass aus einer ursprünglich kleinen Anzeigeeinrichtung sukzessive ein größeres Format erstellt werden kann, soweit dies für den jeweiligen Anwendungszweck von Vorteil ist.

Die Besonderheit der vorliegenden Erfindung besteht in der Verwendung von ESL-Etiketten, die mithilfe eines Funkmoduls ein bidirektionalen Datenaustausch von und zu einer Cloud über ein Mobilfunknetz ermöglichen. Dadurch, dass die Mobilfunknetze nicht nur eine große Reichweite besitzen, sondern mittlerweile flächendeckend zur Verfügung stehen, kann in vorteilhafter Weise auf den Aufbau eines eigenen Datennetzes verzichtet werden, wodurch hohe Investitionskosten entfallen. Hierbei besteht ferner der Vorteil, dass die Anzahl der ESL-Etiketten jederzeit erhöht werden kann, ohne dass eine Überlastung des Mobilfunknetzes eintreten wird. Sämtliche ESL-Etiketten können über die Mobilfunkanbindung direkt mit einer Cloud Informationen austauschen, sodass eine zuverlässige und schnelle Aktualisierung der anzuzeigenden Daten einschließlich eventueller Störungsanzeigen, akustischen oder optischen Anzeigen und Sprachmeldungen möglich ist.

Die Erfindung wird im Nachfolgenden anhand der Figuren nochmals erläutert.

Es zeigt
- Fig. 1: eine schematische Darstellung der Verbindungen von ESL-Etiketten in Warenlagern, Transportfahrzeugen, Produktionsanlagen mit entsprechenden Maschineneinrichtungen und einem Speicher- und Serverdienst und
- Fig. 2: in einer schematischen Ansicht die Verbindung von ESL- Etiketten mit einem Speicher- und Serverdienst mit unterschiedlichen Anzeigeeinrichtungen, die entweder einzeln oder im Zusammenhang mit Bearbeitungsmaschinen verwendet werden.

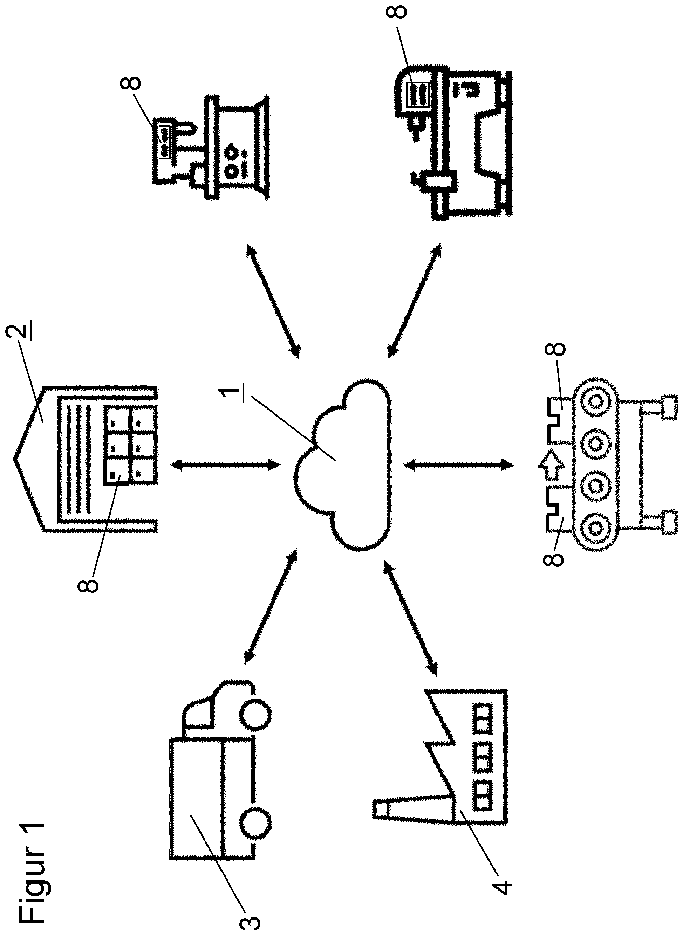

Figur 1 zeigt in einer schematischen Darstellung die Verbindung von ESL-Etiketten 8 mit einem Speicher- und Serverdienstes 1 und beispielsweise mit einem Warenlager 2, einem Transportfahrzeug 3 und einer Produktionsstätte 4. Es bestehen von dem Speicher- und Serverdienst 1 ausgehend direkte Verbindungen über das Mobilfunknetz mit den ESL-Etiketten 8 des Waren- und Materiallagers 2, mit dem Transportfahrzeug 3 sowie mit der Produktionsstätte 4, wobei diese zusätzlich mit Werkbänken in Form von Fräsbänken 5, Drehbänken 6 und Fertigungsbändern 7 oder vergleichbaren Einrichtungen in mehrfacher Kombination ausgestattet sein kann. Sämtliche Werkzeugmaschinen besitzen hierbei ebenfalls ESL-Etiketten 8, welche über ein Funknetz eine direkte Anbindung mit dem Speicher- und Serverdienst 1 besitzen. Auf diese Weise wird ermöglicht, dass sämtliche Komponenten, die beispielsweise für eine Produktionslinie benötigt werden, ihre Daten über die ESL-Etiketten 8 an den Speicher- und Serverdienst 1 übertragen und von dort aus weiterverarbeitet werden können. Gleiches gilt für die Transportfahrzeuge 3, das Warenlager 2 und die Produktionsstätte 4 mit den eingebundenen Maschinen.

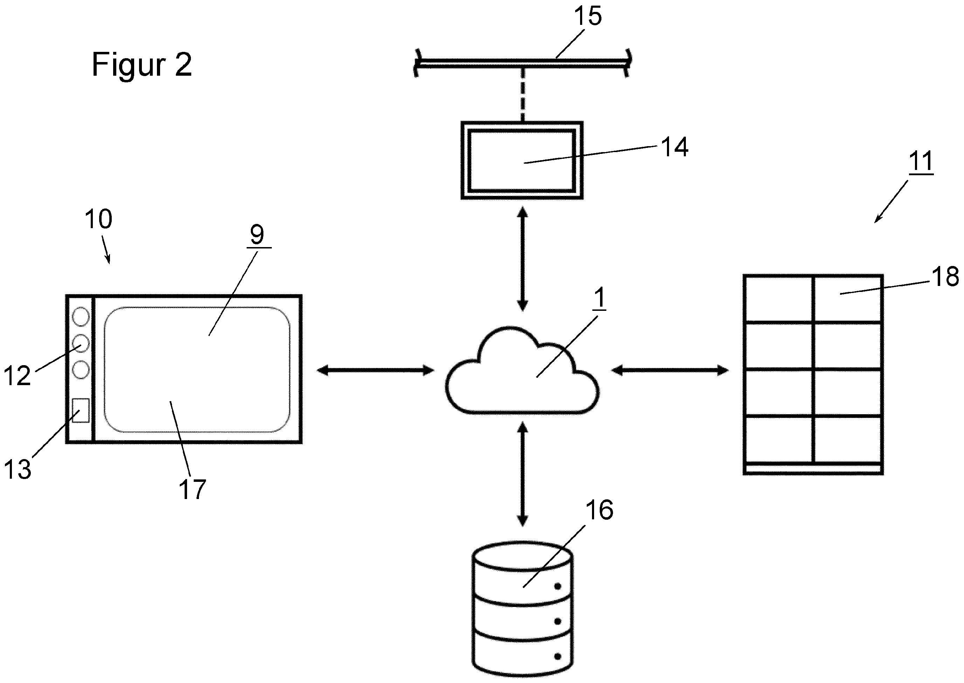

Figur 2 zeigt in einer schematischen Anordnung den Speicher- und Serverdienst 1, welcher mit den ESL-Etiketten 10, 11 verbunden ist. Die ESL-Etiketten 10,11 sind wahlweise mit unterschiedliche großen Anzeigeeinrichtungen 9 verbunden oder Bestandteil der Anzeigeeinrichtungen 9. Die Anzeigeeinrichtungen können beispielswiese in Form von Großbildschirmen 17 oder zusammengesetzten kleineren Anzeigeelemente 18 bestehen. Durch die Verbindung der ESL-Etiketten über das Mobilfunknetz ist eine schnelle Datenübertragung möglich und bietet den Vorteil, dass keine aufwendige Infrastruktur benötigt wird. Die Anzeigeeinrichtungen 9 können im Weiteren nicht nur für alphanummerische Anzeigen und grafische Anzeigen verwendet werden, sondern auch zusätzlich mit einer Ampel 12 ausgestattet sein oder einem Lautsprecher 13, damit ähnlich wie bei einer Verkehrsampel visuell zusätzliche Warnhinweise erfolgen können oder alternativ über den Lautsprecher 13 Durchsagen erfolgen können. Die einzelnen ESL-Etiketten 10, 11, 14 sind über das Mobilfunknetz mit einen Speicher- und Serverdienst 1 verbunden, wobei die ESL-Etiketten 14 zusätzlich gegebenenfalls über eine Busleitung 15 mit weiteren Produktionseinheiten Daten austauschen können.

Die aufgezeigten Möglichkeiten zur Verwendung der ESL-Etiketten 8, 10, 11, 14 mit einem Speicher- und Serverdienstes 1 sind nur beispielhaft aufgezeigt und können in beliebiger Form erweitert werden, sei es durch zusätzliche Maschinen, die in einer Fertigungsstätte 4 eingesetzt werden oder durch weitere Anzeigeelemente, je nachdem, welche Darstellungsweise gewünscht wird. Erweiterungen sind jederzeit möglich, da eine Verbindung mit dem Speicher- und Serverdienst 1 über ein bestehendes Mobilfunknetz für Handys hergestellt werden kann und damit eine grundsätzliche Voraussetzung einer schnellen Datenübertragung vorliegt. Der besondere Vorteil liegt hierbei darin, dass keine aufwendige Infrastruktur geschaffen werden muss, sondern an jedem beliebigen Ort innerhalb eines Fabrikationsgebäudes, Lagers oder auf dem Transport über beispielsweise die ESL-Etiketten 10, 11, 14 die Verbindung zum Speicher- und Serverdienst 1 hergestellt werden kann. Zur Sicherung der Daten besteht darüber hinaus die Möglichkeit, die übermittelten Daten in einem weiteren physikalischen Datenspeicher 16 zu speichern. Der Datenspeicher 16 kann beispielsweise Bestandteil der IT-Einrichtung einer Firma sein.

### Bezugszeichenliste

- 1: Speicher- und Serverdienst
- 2: Warenlager
- 3: Transportfahrzeug
- 4: Produktionsstätte
- 8: ESL-Etikett
- 9: Anzeigeeinrichtung
- 10: ESL-Etikett
- 11: ESL-Etikett
- 12: Ampel
- 13: Lautsprecher
- 14: ESL-Etikett
- 15: Busleitung
- 16: Datenspeicher
- 17: Großbildschirm
- 18: Anzeigeelement

## Patentansprüche

1. ESL-Etikett (8, 10, 11, 14) zur Datenübertragung und Informationsanzeige, bestehend zumindest aus einer Anzeigeeinrichtung (9) und einem Funkmodul,
**dadurch gekennzeichnet,**
**dass** das Funkmodul eingerichtet ist, um Daten bidirektional von und zu einem Speicher- und Serverdienst (1) (Cloud) über ein Mobilfunknetz zu übertragen.

2. ESL-Etikett (8, 10, 11, 14) nach Anspruch 1,
**dadurch gekennzeichnet,**
**dass** die ESL-Etiketten (8, 10, 11, 14) zur Montage an Maschinen, Maschineneinrichtungen, Transportbehältern und Lagereinrichtungen vorgesehen sind.

3. ESL-Etikett (8, 10, 11, 14) nach Anspruch 1 oder 2,
**dadurch gekennzeichnet,**
**dass** die ESL-Etiketten (8, 10, 11, 14) über ein Bussystem oder I/O-Kontakte mit Maschinen oder externen Anzeigeeinrichtungen verbunden sind.

4. ESL-Etikett (8, 10, 11, 14) nach Anspruch 1,2 oder 3,
**dadurch gekennzeichnet,**
**dass** die ESL-Etiketten (8, 10, 11, 14) Warnsignale in Form von optischen und/oder akustischen Signalen oder Meldungen erzeugen.

5. ESL-Etikett (8, 10, 11, 14) nach einem der Ansprüche 1 bis 4,
**dadurch gekennzeichnet,**
**dass** die ESL-Etiketten (8, 10, 11, 14) mit einem nicht flüchtigen Display, beispielsweise E-Ink ausgestattet sind.

6. ESL-Etikett (8, 10, 11, 14) nach einem der Ansprüche 1 bis 5,
**dadurch gekennzeichnet,**
**dass** die ESL-Etiketten (8, 10, 11, 14) mit einer stationären Energieversorgung in Form einer langlebigen Batterie ausgestattet sind oder elektromagnetische Energie aus einem Funkfeld entnehmen.

7. ESL-Etikett (8, 10, 11, 14) nach einem der Ansprüche 1 bis 6,
**dadurch gekennzeichnet,**
**dass** die ESL-Etiketten (8, 10, 11, 14) mit klein- oder großformatigen Anzeigeeinrichtungen (9) oder -elementen (18) ausgestattet oder mit Beamern verbunden sind.

8. ESL-Etikett (8, 10, 11, 14) nach einem der Ansprüche 1 bis 7,
**dadurch gekennzeichnet,**
**dass** die Anzeigeeinrichtung (9) durch einen Farbumschlag eine Störung anzeigt.

9. ESL-Etikett (8, 10, 11, 14) nach einem der Ansprüche 1 bis 8,
**dadurch gekennzeichnet,**
**dass** die Anzeigeeinrichtung (9) zur Darstellung von Grafikdaten, Codes und/oder alphanummerischen Informationen vorgesehen ist.

10. ESL-Etikett (8, 10, 11, 14) nach einem der Ansprüche 1 bis 9,
**dadurch gekennzeichnet,**
**dass** die Anzeigeeinrichtung (9) Live-Durchsagen oder Text-Speech-Anzeigen überträgt oder darstellt.

11. ESL-Etikett (8, 10, 11, 14) nach einem der Ansprüche 1 bis 10,
**dadurch gekennzeichnet,**
**dass** die Anzeigeeinrichtung (9) zur Übertragung von Nachrichten in Form von E-Mails, SMS, Smartwatch- oder Telefoninformationen vorgesehen ist.

12. ESL-Etikett (8, 10, 11, 14) nach einem der Ansprüche 1 bis 11,
**dadurch gekennzeichnet,**
**dass** die Anzeigeeinrichtung (9) modular aufgebaut und erweiterbar ist.
